# EUROPÄISCHE PATENTSCHRIFT

(11) **EP 3 748 601 B1**
(45) Veröffentlichungstag und Bekanntmachung des Hinweises auf die Patenterteilung: **23.10.2024**
(21) Anmeldenummer: 20174475.2
(22) Anmeldetag: 13.05.2020
(51) Int. Cl.: G08G 1/00

(54) **VERFAHREN ZUM VORGEBEN EINER FAHRSTRATEGIE, SOWIE FAHRZEUG**
VEHICLE AND METHOD FOR SPECIFYING A DRIVING STRATEGY
PROCÉDÉ DE DÉTERMINATION D'UNE STRATÉGIE DE CONDUITE AINSI QUE VÉHICULE

(30) Priorität: 05.06.2019 DE 102019208142
(43) Veröffentlichungstag der Anmeldung: 09.12.2020
(73) Patentinhaber: VOLKSWAGEN AG, 38440 Wolfsburg (DE)
(72) Erfinder: Cassebaum, Oliver, 38448 Wolfsburg (DE); Esatbeyoglu, Enes, 38120 Braunschweig (DE); Wallentin, Per, 153 30 Järna (SE)

(56) Entgegenhaltungen:
- WO-A1-2019/013694
- DE-A1- 102007 024 877
- DE-A1- 102012 222 869
- DE-A1- 102015 006 445
- DE-T5- 112009 005 105

## Beschreibung

Die Erfindung betrifft ein Verfahren zum Vorgeben einer Fahrstrategie für ein Fahrzeug, sowie ein Fahrzeug.

Es ist bekannt, dass immer mehr Fahrassistenten in Fahrzeuge integriert werden, die Fahrfunktionen von dem Fahrer übernehmen. Dabei kann durch einen Fahrassistenten z.B. je nach Streckenführung und/oder Reichenweitenbedarf eine Geschwindigkeit für das Fahrzeug gewählt werden. Dadurch kann ein effizienter Fahrstil für das Fahrzeug erreicht werden. Dies hat jedoch den Nachteil, dass nachfolgende Verfolgerfahrzeuge bei einer niedrig gewählten Geschwindigkeit durch den Fahrassistenten ausgebremst werden können, wenn diese z.B. aufgrund der aktuellen Verkehrssituation nicht überholen können oder dürfen.

Aus der DE 10 2017 200 871 A1 ist es bekannt, einen Koppelbetrieb zwischen zwei Fahrzeugen vorzusehen, bei welcher mehrere Fahrzeuge sich in Kommunikationsverbindung befinden, um ein einheitliches Fahrverhalten zu ermöglichen. Durch das einheitliche Fahrverhalten z.B. kann der Durchsatz an Fahrzeugen auf einem Streckenabschnitt erhöht werden. Ein Koppelbetrieb ist allerdings nicht möglich, wenn es sich bei dem Verfolgerfahrzeug um ein älteres Fahrzeug handelt, das nicht für einen Koppelbetrieb ausgebildet ist. Weiterhin ist es denkbar, dass das Verfolgerfahrzeug sich aufgrund von Vorgaben eines Fahrers oder aufgrund eigener Fahrzeugeigenschaften, die einen effizienten Betrieb des Fahrzeuges auch bei höheren Geschwindigkeiten ermöglichen, nicht in einen Koppelbetrieb bei der Geschwindigkeit des vorausfahrenden Fahrzeuges einbringen möchte.

Aus der DE 10 2015 006 445 A1 ist ein Verfahren zur Unterstützung eines Fahrers eines Fahrzeuges bekannt, bei dem in einem Grundmodus die Geschwindigkeit des Fahrzeugs selbsttätig geregelt und/oder gesteuert wird.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Verkehrssituation für ein Verfolgerfahrzeug durch ein Fahrzeug zu verbessern, vorzugsweise, eine Hinderniswirkung des Fahrzeuges auf ein Verfolgerfahrzeug zu reduzieren oder zu vermeiden.

Die voranstehende Aufgabe wird gelöst durch ein Verfahren mit den Merkmalen des Anspruchs 1, sowie ein Fahrzeug mit den Merkmalen des Anspruchs 9 Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Erfindungsgemäß ist ein Verfahren zum Vorgeben einer Fahrstrategie gemäß Anspruch 1 vorgesehen.

Erfindungsgemäß wird die Abhängigkeit der Reaktionsmaßnahme von der Ankoppelbereitschaft dahingehend verstanden, dass die Reaktionsmaßnahme nur dann erfolgt, wenn die negative Ankoppelbereitschaft erkannt wurde. Erfindungsgemäß geht es sich bei der Reaktionsmaßnahme folglich um eine Reaktionsmaßnahme auf die negative Ankoppelbereitschaft des Verfolgerfahrzeuges handeln. Beim Erkennen der Ankoppelbereitschaft wird überprüft, ob die Ankoppelbereitschaft negativ oder positiv ist, wobei bei einer positiven Ankoppelbereitschaft ein Ankoppeln des Verfolgerfahrzeuges an das Fahrzeug unter Angleichung des Verfolgerfahrzeuges an den ersten Fahrparameters des Fahrzeugs erfolgt. Bei der negativen Ankoppelbereitschaft kann das Ankoppeln des Verfolgerfahrzeuges an das Fahrzeug, insbesondere zunächst, unterbleiben. Das Fahrzeug kann insbesondere auch als Ego-Fahrzeug bezeichnet werden. Vorzugsweise können die Schritte des Verfahrens durch eine Kontrolleinheit und/oder eine Sensoreinheit des Fahrzeuges durchgeführt werden. Erfindungsgemäß handelt es sich bei dem Fahrzeug um ein zumindest teilweise automatisiert betreibbares, vorzugsweise um ein autonom betreibbares, Fahrzeug. Unter dem Verfolgerfahrzeug kann ein weiterer Verkehrsteilnehmer verstanden werden, welcher dem Fahrzeug nachfolgt. Dabei kann sich das Verfolgerfahrzeug, insbesondere in gerader Linie, hinter dem Fahrzeug auf derselben Fahrspur befinden oder, insbesondere schräg hinter dem Fahrzeug, auf einer weiteren Fahrspur. Insbesondere kann es sich bei dem Fahrzeug und/oder dem Verfolgerfahrzeug um ein Kraftfahrzeug handeln.

Bei dem ersten Fahrparameter kann es sich vorzugsweise um eine Geschwindigkeit oder eine Beschleunigung des Fahrzeuges handeln. Insbesondere kann das Fahrzeug beim Fahren mit dem ersten Fahrparameter in einem autonomen Fahrmodus fahren. Bei dem zweiten Fahrparameter kann es sich zum Beispiel um eine Geschwindigkeit oder Beschleunigung des Verfolgerfahrzeuges handeln. Vorzugsweise handelt es sich bei dem zweiten Fahrparameter um einen Abstand des Verfolgerfahrzeuges zum Fahrzeug. Der zweite Fahrparameter kann durch eine Sensorvorrichtung des Fahrzeuges erfasst werden. So kann eine Messung des zweiten Fahrparameters durch das Fahrzeug vorgesehen sein. Weiterhin ist es denkbar, dass das Erfassen des zweiten Fahrparameters durch den Erhalt einer Mitteilung über den zweiten Fahrparameter vom Verfolgerfahrzeug erfolgt. So kann z.B. eine Kommunikationsverbindung zwischen dem Fahrzeug und dem Verfolgerfahrzeug aufgebaut werden, um Daten auszutauschen. Über die Kommunikationsverbindung kann das Fahrzeug den zweiten Fahrparameter erhalten.

Die Ankoppelbereitschaft kann vorzugsweise zwei Zustände umfassen, wobei einer der Zustände die negative Ankoppelbereitschaft ist und der andere Zustand die positive Ankoppelbereitschaft. Insbesondere kann die Ankoppelbereitschaft passiv oder aktiv erkannt werden. So ist es denkbar, dass eine Abfrage über die Ankoppelbereitschaft des Verfolgerfahrzeuges durch die Kommunikationsverbindung erfolgt. Unter der Beibehaltung des ersten Fahrparameters kann verstanden werden, dass das Fahrzeug den ersten Fahrparameter konstant hält und/oder das Verfolgerfahrzeug sich auf den ersten Fahrparameter einstellt, insbesondere den ersten Fahrparameter übernimmt. So ist es denkbar, dass das Verfolgerfahrzeug bei positiver Ankoppelbereitschaft eine Geschwindigkeit des Fahrzeuges annimmt und/oder einen Abstand zum Fahrzeug konstant hält. Insbesondere kann dem Fahrzeug dabei die Ankoppelbereitschaft durch das Verfolgerfahrzeug aktiv mitgeteilt werden. Somit kann die Erkennung durch Erhalt der Ankoppelbereitschaft durch das Fahrzeug passiv erfolgen. Weiterhin ist es denkbar, dass das Fahrzeug den zweiten Fahrparameter durch Messung erfasst. So kann z.B. eine Abstandsmessung zum Erfassen des zweiten Fahrparameters vorgesehen sein. Erhält das Fahrzeug keine Rückmeldung vom Verfolgerfahrzeug, kann, insbesondere anhand des zweiten Fahrparameters, erkannt werden, dass die Ankoppelbereitschaft des Verfolgerfahrzeuges negativ ist, d.h. insbesondere dass das Verfolgerfahrzeug nicht zum Ankoppeln bereit ist und/oder die Ankoppelbereitschaft nicht vorliegt. Dadurch kann die Ankoppelbereitschaft durch das Fahrzeug aktiv erfasst werden.

Die Reaktionsmaßnahme kann eine Anpassung der Fahrstrategie des Fahrzeuges umfassen. Das Fahrzeug kann als Reaktionsmaßnahme z.B. beschleunigen, seine Ausrichtung auf der Fahrspur ändern oder dergleichen. Insbesondere kann ein Bewerten des zweiten Fahrparameters, vorzugsweise in Abhängigkeit von dem ersten Fahrparameter, vorgesehen sein und die Reaktionsmaßnahme in Abhängigkeit von der Bewertung durchgeführt werden.

Dadurch kann vorteilhafterweise verhindert werden, dass das Fahrzeug für das Verfolgerfahrzeug ein Hindernis darstellt oder, in Abhängigkeit von der Reaktionsmaßnahme, dessen Hinderniswirkung auf das Verfolgerfahrzeug reduziert wird. Durch die Reaktionsmaßnahme kann somit eine Fahrstrategie vorgegeben werden, welche sich positiv auf die Verkehrssituation auswirkt.

Ferner kann bei einem erfindungsgemäßen Verfahren vorteilhafterweise vorgesehen, dass der erste Fahrparameter durch einen Energiesparmodus vorgegeben wird, in welchem das Fahrzeug betrieben wird, wobei die Reaktionsmaßnahme eine Deaktivierung des Energiesparmodus umfasst. Im Energiesparmodus kann vorzugsweise eine Geschwindigkeit des Fahrzeuges reduziert sein, um den Energieverbrauch zu reduzieren. Dadurch kann die Reichweite des Fahrzeuges erhöht sein. Gleichzeitig kann erkannt werden, dass die reduzierte Geschwindigkeit dazu führt, dass das Fahrzeug für das Verfolgerfahrzeug ein Hindernis darstellt. In diesem Fall kann die Reaktionsmaßnahme priorisiert sein und der Energiesparmodus durch das Fahrzeug verlassen werden. Vorzugsweise kann bei der Deaktivierung des Energiesparmodus der erste Fahrparameter an das Verfolgerfahrzeug zumindest teilweise angepasst werden, insbesondere eine Geschwindigkeit des Fahrzeuges erhöht werden.

Weiterhin ist es bei einem erfindungsgemäßen Verfahren denkbar, dass die Reaktionsmaßnahme das Einleiten einer, insbesondere virtuellen, Verhandlung über eine Kopplung des Verfolgerfahrzeuges mit dem Fahrzeug, insbesondere unter Anpassung des ersten Fahrparameters des Fahrzeuges, umfasst. Unter der Kopplung kann insbesondere eine virtuelle Verbindung des Fahrzeuges und des Verfolgerfahrzeuges verstanden werden, bei welcher das Fahrzeug und das Verfolgerfahrzeug einen konstanten Abstand und/oder eine angeglichene Geschwindigkeit einhalten. Dadurch kann ein effizienter Fahrbetrieb, insbesondere bei geringem Abstand und/oder Ausnutzung eines Windschattens des Fahrzeuges durch das Verfolgerfahrzeug, erzielt werden. So ist es denkbar, dass eine Kommunikationsverbindung zwischen dem Fahrzeug und dem Verfolgerfahrzeug aufgebaut wird, um die Verhandlung einzuleiten und/oder durchzuführen. Unter der Verhandlung über die Kopplung kann ein Datenaustausch zwischen dem Fahrzeug und dem Verfolgerfahrzeug verstanden werden. Bei dem Datenaustausch kann, insbesondere iterativ, ermittelt werden, welchen Wert des ersten Fahrparameters das Fahrzeug annehmen soll, damit die Ankoppelbereitschaft des Verfolgerfahrzeugs positiv wird. Dadurch kann ein Kompromiss des Fahrzeuges und des Verfolgerfahrzeugs, insbesondere automatisch, gefunden werden, bei welchem das Verfolgerfahrzeug sich nicht vollständig an das Fahrzeug anpasst, das Fahrzeug gleichzeigt aber auch kein Hindernis für das Verfolgerfahrzeug darstellt. Durch die Verhandlung kann eine Kopplung des Fahrzeuges mit dem Verfolgerfahrzeug trotz zunächst negativer Ankoppelbereitschaft ermöglicht werden. Dadurch kann eine Verkehrssituation und/oder Fahrsituation des Fahrzeuges und des Verfolgerfahrzeugs insgesamt verbessert sein.

Weiterhin kann bei einem erfindungsgemäßen Verfahren vorteilhafterweise vorgesehen, dass beim Erfassen des zweiten Fahrparameters des Verfolgerfahrzeuges und/oder beim Erkennen der Ankoppelbereitschaft eine Mustererkennung des zweiten Fahrparameters durchgeführt wird. Die Mustererkennung kann insbesondere eine Analyse des zweiten Fahrparameters umfassen. Anhand des erkannten Musters kann z. B. beurteilt werden, ob die Ankoppelbereitschaft negativ oder positiv ist. Ferner kann anhand des Musters beurteilt werden, welche Art der Reaktionsmaßnahme ausgewählt werden soll. So kann beispielsweise zwischen einer kritischen Situation aufgrund eines sehr schnell herannahenden Verfolgerfahrzeuges und einer weniger kritischen Situation aufgrund eines sich langsam nähernden Verfolgerfahrzeuges unterschieden werden. In Abhängigkeit von der kritischen oder weniger kritischen Situation kann die Art der Reaktionsmaßnahme und/oder die Reaktionsmaßnahme ausgewählt werden. Weiterhin kann bei einem erfindungsgemäßen Verfahren vorteilhafterweise vorgesehen, dass die Mustererkennung des zweiten Fahrparameters ein Erkennen einer Veränderung des zweiten Fahrparameters, insbesondere eines Alternierens des zweiten Fahrparameters, umfasst. Es ist z. B. denkbar, dass sich der zweite Fahrparameter schnell ändert, d.h. eine Aufzeichnung des zweiten Fahrparameters eine zeitliche Änderung aufweist, die als kritisch erkannt wird. Anhand der Veränderung des zweiten Fahrparameters kann die Reaktionsmaßnahme ausgewählt und/oder durchgeführt werden. Insbesondere kann ein Alternieren des zweiten Fahrparameters darauf hindeuten, dass eine Ankoppelbereitschaft nicht vorliegt. Wenn es sich bei dem zweiten Fahrparameter um eine Geschwindigkeit des Verfolgerfahrzeuges oder um einen Abstand des Verfolgerfahrzeuges zum Fahrzeug handelt, kann der Reaktionsmaßnahme und/oder der Erkennung der Ankoppelbereitschaft die Annahme zugrunde gelegt werden, dass bei einer positiven Ankoppelbereitschaft die Ankopplung automatisch erfolgt und der zweite Fahrparameter sich konstant einstellt. Somit kann durch die Veränderung in einfacher Art und Weise, und insbesondere ohne Rückmeldung des Verfolgerfahrzeuges, die Ankoppelbereitschaft durch das Fahrzeug erkannt werden. Dies kann eine Grundlage dafür bilden, dass das Fahrzeug die Reaktionsmaßnahme durchführen kann, um kein Hindernis für das Verfolgerfahrzeug darzustellen.

Weiterhin kann bei einem erfindungsgemäßen Verfahren vorteilhafterweise vorgesehen sein, dass das Erfassen des zweiten Fahrparameters passiv durch eine Rückwärtssensorik des Fahrzeuges durchgeführt wird. Unter dem passiven Erfassen des zweiten Fahrparameters kann verstanden werden, dass die Erkennung insbesondere vollständig durch das Fahrzeug und/oder ohne Rückmeldung des Verfolgerfahrzeuges erfolgt. Die Rückwärtssensorik kann zum Erfassen der Ankoppelbereitschaft vorzugsweise eine Radarmessung, eine Lidarmessung und/oder durch eine optische Messung durchführen. Weiterhin ist es denkbar, dass die Rückwärtssensorik des Fahrzeuges zum Erfassen einer Helligkeit ausgebildet ist. So kann die Rückwärtssensorik in einem Rückspiegel des Fahrzeuges verbaut sein und/oder zum Abdunkeln eines Rückspiegels des Fahrzeugs einsetzbar sein. Somit können mehrere Funktionen des Fahrzeuges in der Rückwärtssensorik vereint sein. Ferner kann ein bestehendes Sensorsystem des Fahrzeuges zum Erfassen des zweiten Fahrparameters verwendet werden, so dass keine zusätzlichen Sensoren im Fahrzeug notwendig sind. Weiterhin kann dadurch in einfacher Art und Weise der zweite Fahrparameter auch für Verfolgerfahrzeuge erfasst werden, die nicht zur Kommunikation mit weiteren Verkehrsteilnehmern ausgebildet sind. Auch für solche Verfolgerfahrzeuge kann somit eine Hinderniswirkung des Fahrzeuges reduziert oder vermieden werden.

Weiterhin kann bei einem erfindungsgemäßen Verfahren vorteilhafterweise vorgesehen, dass beim Erfassen des zweiten Fahrparameters des Verfolgerfahrzeuges und/oder beim Erkennen der Ankoppelbereitschaft durch das Fahrzeug auf ein Netzwerk zugegriffen wird. Be dem Netzwerk kann es sich beispielsweise um eine WLAN-Verbindung und/oder eine Mobilfunkverbindung, insbesondere in Form einer LTE-Verbindung, handeln. Insbesondere kann für das Netzwerk ein 5G-Netz und/oder eine WLAN-P-Verbindung genutzt werden. Insbesondere kann beim Zugreifen auf das Netzwerk eine Cloud genutzt werden. Weiterhin ist es denkbar, dass es sich bei dem Netzwerk und ein Ad-hoc-Netzwerk handelt. Unter einem Ad-hoc-Netzwerk kann es sich um eine temporäre Kommunikationsverbindung zwischen dem Fahrzeug und dem Verfolgerfahrzeug handeln. Dadurch kann z.B. in einfacher Art und Weise eine Erkennung der Ankoppelbereitschaft durch einen Datenaustausch zwischen dem Fahrzeug und dem Verfolgerfahrzeug realisiert werden. Dadurch kann die Ankoppelbereitschaft erkannt werden und/oder eine virtuelle Verhandlung über eine Kopplung des Fahrzeuges und des Verfolgerfahrzeuges stattfinden. Weiterhin ist es denkbar, dass das Fahrzeug aus dem Netzwerk eine Position des Verfolgerfahrzeuges bezieht. Bei der Position des Verfolgerfahrzeuges kann es sich um eine absolute oder eine zum Fahrzeug relative Position handeln. Insbesondere können die Positionsdaten satellitengestützte Daten, wie z.B. GPS-Daten umfassen. Aus der Position des Verfolgerfahrzeuges kann der zweite Fahrparameter bestimmt werden.

Es ist erfindungsgemäß vorgesehen, dass das Fahrzeug, insbesondere beim Erfassen des Verfolgerfahrzeuges, beim Erfassen des zweiten Fahrparameters und/oder beim Erkennen der Ankoppelbereitschaft, in einem zumindest teilweise automatisierten Fahrmodus betrieben wird und die Reaktionsmaßnahme eine Deaktivierung des zumindest teilweise automatisierten Fahrmodus umfasst. Unter dem zumindest teilweise automatisierten Fahrmodus kann verstanden werden, dass während des zumindest teilweise automatisierten Fahrmodus Fahrfunktionen des Fahrzeuges automatisch durchführbar sind. Bei der Deaktivierung des zumindest teilweise automatisierten Fahrmodus kann insbesondere ein Umschalten in einen manuellen Fahrmodus vorgesehen sein. Dadurch kann einem Fahrer die Kontrolle über das Fahrzeug übergeben werden, so dass der Fahrer entscheiden kann, wie er auf das Verfolgerfahrzeug reagieren möchte.

Vorzugsweise kann bei einem erfindungsgemäßen Verfahren vorgesehen sein, dass die Reaktionsmaßnahme in Abhängigkeit von einer Verkehrssituation, in welcher sich das Fahrzeug befindet, durchgeführt wird. Insbesondere kann eine Erkennung der Verkehrssituation durch das Fahrzeug vorgesehen sein. So ist es denkbar, dass ein Verkehrsschild von dem Fahrzeug erfasst wird, um die Verkehrssituation zu erkennen. Stellt das Fahrzeug beispielsweise fest, dass die aktuelle Verkehrssituation ein Überholverbot beinhaltet, kann die Reaktionsmaßnahme entsprechend angepasst werden. Insbesondere kann in Abhängigkeit von der Verkehrssituation eine Gewichtung erfolgen, ob das Fahrzeug ein Hindernis für das Verfolgerfahrzeug darstellt oder nicht. Ferner kann die Verkehrssituation z. B. eine erlaubte Höchstgeschwindigkeit auf einem bestimmten Streckenabschnitt umfassen. Wenn das Fahrzeug bereits die Höchstgeschwindigkeit erreicht hat, kann die Reaktionsmaßnahme einen Hinweis auf die, insbesondere bereits erreichte, Höchstgeschwindigkeit an das Verfolgerfahrzeug umfassen. Durch die Berücksichtigung der Verkehrssituation kann insbesondere eine situationsadäquate Reaktionsmaßnahme bestimmt werden.

Gemäß einem weiteren Aspekt der Erfindung ist ein Fahrzeug, zumindest teilweise oder vollständig autonom betreibbares Fahrzeug, aufweisend eine Kontrolleinheit, die zum Durchführen eines erfindungsgemäßen Verfahrens ausgebildet ist.

Damit bringt ein erfindungsgemäßes Fahrzeug die gleichen Vorteile mit sich, wie sie mit Bezug auf ein erfindungsgemäßes Verfahren beschrieben worden sind. Unter einem zumindest teilweise autonom betreibbaren oder einem zumindest teilweise autonom fahrenden Fahrzeug kann ein Fahrzeug verstanden werden, welches Fahrfunktionen ohne Eingriff eines Fahrers ausführt. Ein vollständig autonom betreibbares Fahrzeug kann vorzugsweise zum Ausführen aller insbesondere sicherheitsrelevanten Fahrfunktionen ohne Eingriff des Fahrers ausgebildet sein. Mit erhöhtem Automatisierungsgrad kann eine erhöhte Wahrnehmung der aktuellen Verkehrssituation und eine verbesserte Reaktion auf die Verkehrssituation erforderlich sein. Durch das erfindungsgemäße Fahrzeug können auch hinter dem Fahrzeug fahrende Verfolgerfahrzeuge erkannt werden. Den Verfolgerfahrzeugen kann ferner ein Weg freigemacht werden, so dass das Fahrzeug das Verfolgerfahrzeug nicht blockiert, insbesondere ohne dass eine menschliche Entscheidung notwendig ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine Verkehrssituation eines erfindungsgemäßen Fahrzeugs in einem ersten Ausführungsbeispiel,
- Figur 2: eine Verkehrssituation eines erfindungsgemäßen Fahrzeugs in einem zweiten Ausführungsbeispiel,
- Figur 3: ein erfindungsgemäßes Verfahren in schematischer Darstellung der Verfahrensschritte,
- Figur 4: eine Mustererkennung eines zweiten Fahrparameters eines Verfolgerfahrzeuges,
- Figur 5: eine Reaktionsmaßnahme mit möglichen Durchführungen.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

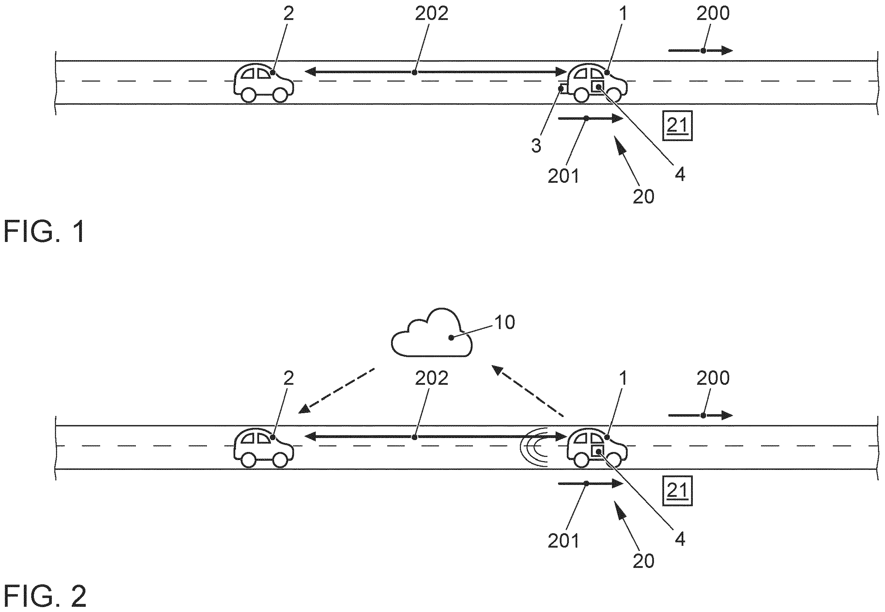

Die Figuren 1 und 2 zeigen jeweils ein erfindungsgemäßes Fahrzeug 1 in einer Verkehrssituation 20. Dabei befindet sich hinter dem Fahrzeug 1 ein Verfolgerfahrzeug 2. Insbesondere befindet sich das Verfolgerfahrzeug 2 und das Fahrzeug 1 auf derselben Fahrspur. Das Fahrzeug 1 weist dabei einen ersten Fahrparameter 201 auf, mit welchem das Fahrzeug 1 sich in eine Fahrtrichtung 200 bewegt. Das Verfolgerfahrzeug 2 bewegt sich ebenfalls in die Fahrtrichtung 200, weist jedoch einen zweiten Fahrparameter 202 auf. Bei dem ersten Fahrparameter 201 kann es sich insbesondere um eine Geschwindigkeit des Fahrzeuges 1 handeln. Vorzugsweise wird das Fahrzeug 1 in einem zumindest teilweise automatisierten, vorzugsweise autonomen, Fahrmodus A und/oder einem Energiesparmodus I betrieben. Insbesondere kann es sich bei dem Fahrzeug 1 um ein autonom fahrendes Fahrzeug 1 handeln. Dabei kann das Fahrzeug 1 sich mit einer energieeffizienten Geschwindigkeit bewegen, die unter der durch die Verkehrssituation 20, insbesondere durch ein Verkehrsschild 21 in der Verkehrssituation 20, vorgegebene Höchstgeschwindigkeit liegt. Bewegt sich nun das Verfolgerfahrzeug 2 mit einer höheren Geschwindigkeit, als das Fahrzeug 1, kann eine Hinderniswirkung des Fahrzeuges 1 für das Verfolgerfahrzeug 2 durch das Fahrzeug 1 reduziert oder vermieden werden. Dazu weist das Fahrzeug 1 eine Kontrolleinheit 4 auf, die zum Ausführen eines erfindungsgemäßen Verfahrens 100 ausgebildet ist.

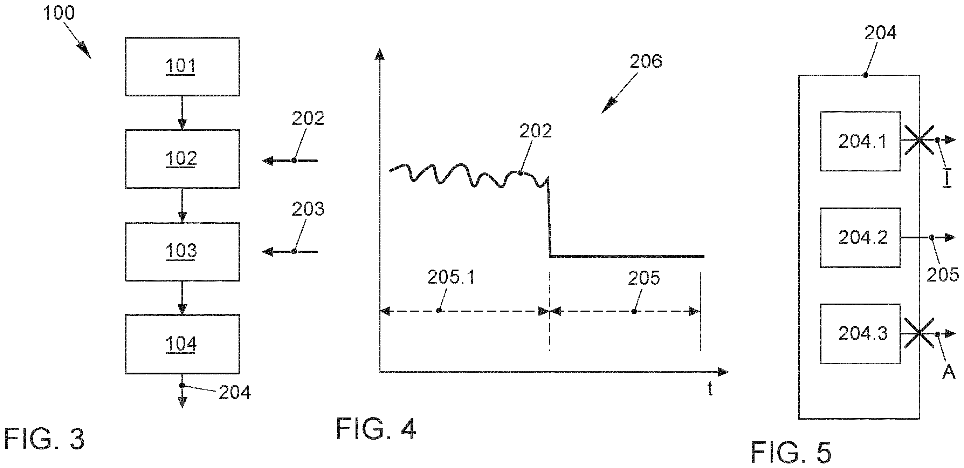

Das Verfahren 100 zum Vorgeben einer Fahrstrategie für das mit dem ersten Fahrparameter 201 fahrende Fahrzeug 1 ist in Figur 3 in schematischer Darstellung der Verfahrensschritte gezeigt. Das Verfahren 100 umfasst ein Erfassen 101 des Verfolgerfahrzeuges 2 und ein Erfassen 102 des zweiten Fahrparameters 202 des Verfolgerfahrzeuges 2. Bei dem zweiten Fahrparameter 202 kann es sich vorzugsweise um einen Abstand des Verfolgerfahrzeuges 2 zum Fahrzeug 1 handeln. Es ist jedoch ebenso denkbar, dass es sich bei dem Fahrparameter 202 um eine Geschwindigkeit des Verfolgerfahrzeuges handelt.

Das Fahrzeug 1 gemäß Figur 1 weist dazu eine Rückwärtssensorik 3 auf, die mit der Kontrolleinheit 4 in Datenverbindung steht. Durch die Rückwärtssensorik kann das Fahrzeug 1 das Verfolgerfahrzeug 2 und den zweiten Fahrparameter 202 des Verfolgerfahrzeuges 2 passiv erfassen. So kann die Rückwärtssensorik 3 einen Radarsensor, einen Lidarsensor und/oder einen optischen Sensor zum Durchführen einer Messung des zweiten Fahrparameters 202 aufweisen. Weiterhin kann die Rückwärtssensorik 3 einen Helligkeitssensor umfassen und z. B. in einen Rückspiegel und/oder Außenspiegel des Fahrzeuges 1 integriert sein. Durch die Rückwärtssensorik 3 kann der zweite Fahrparameter 202 auch dann erfasst werden, wenn es sich bei dem Verfolgerfahrzeug 2 um einen Verkehrsteilnehmer handelt, welcher nicht zur Datenkommunikation mit dem Fahrzeug 1 ausgebildet ist.

Das Fahrzeug 1 gemäß Figur 2 weist eine Verbindung zu einem Netzwerk 10 auf, um den zweiten Fahrparameter 202 zu erfassen. Dazu kann die Kontrolleinheit 4 eine Netzwerkschnittstelle aufweisen. Bei dem Netzwerk 10 kann es sich beispielsweise um ein WLAN-Netzwerk oder eine Mobilfunkverbindung handeln. Insbesondere kann vorgesehen sein, dass das Fahrzeug 1 und das Verfolgerfahrzeug 2 ein Ad-hoc-Netzwerk als Netzwerk 10 aufbauen, um einen Datenaustausch zu gewährleisten. Über das Netzwerk 10 kann das Fahrzeug 1 den zweiten Fahrparameter 202 direkt oder indirekt vom Verfolgerfahrzeug 2 beziehen. So kann vorgesehen sein, dass das Verfolgerfahrzeug 2 dem Fahrzeug 1 den zweiten Fahrparameter 202 direkt mitteilt oder Daten übermittelt, aus denen das Fahrzeug 1 den zweiten Fahrparameter 202 bestimmt. Weiterhin kann dem Fahrzeug 1 durch das Netzwerk 10 eine Position des Verfolgerfahrzeuges 1 zur Verfügung gestellt werden, durch welche das Fahrzeug 1 den zweiten Fahrparameter 202 bestimmen kann.

Das Verfahren 100 umfasst ferner ein Erkennen 103 einer Ankoppelbereitschaft 203 des Verfolgerfahrzeuges 2. Dabei wird durch das Fahrzeug 1 überprüft, ob das Verfolgerfahrzeug 2 dazu bereit ist, seinen Fahrbetrieb mit dem des Fahrzeuges 1 zu synchronisieren, insbesondere an den ersten Fahrparameter 201 anzugleichen. Insbesondere kann das Verfolgerfahrzeug 2 beim Ankoppeln an das Fahrzeug 1 beispielsweise eine Geschwindigkeit des Fahrzeuges 1 annehmen. Bei einer positiven Ankoppelbereitschaft 203 ist somit ein Ankoppeln des Verfolgerfahrzeuges 2 an das Fahrzeug 1 unter Beibehaltung des ersten Fahrparameters 201 des Fahrzeugs 1 vorgesehen. Bei einer negativen Ankoppelbereitschaft 203 unterbleibt das Ankoppeln des Verfolgerfahrzeuges 2 an das Fahrzeug 1, insbesondere wobei das Verfolgerfahrzeug 2 zumindest nicht zur Angleichung an den ersten Fahrparameter 202 bereit ist.

Das Erkennen 103 der Ankoppelbereitschaft 203 kann eine Mustererkennung 206 umfassen, wie in Figur 4 dargestellt. Dabei wird der zweite Fahrparameter 202 des Verfolgerfahrzeuges 2 über eine Zeit t erfasst. Insbesondere handelt es sich hier bei dem zweiten Fahrparameter 202 um einen Abstand des Verfolgerfahrzeuges 2 zum Fahrzeug 1. Während eines unabhängigen Fahrbetriebes 205.1 ändert sich der zweite Fahrparameter 202 durch häufiges Alternieren. Bei einer Kopplung 205 ist der zweite Fahrparameter 202 über die Zeit t konstant. Folglich kann davon ausgegangen werden, dass sich das Verfolgerfahrzeug 2 auf das Fahrzeug 1 eingestellt hat. Die Mustererkennung 206 kann vorteilhafterweise beim Fahrzeug 1 gemäß Figur 1 eingesetzt werden. Insbesondere ist eine Kommunikationsverbindung des Fahrzeuges 1 und des Verfolgerfahrzeuges 2 durch die Mustererkennung 206 nicht notwendig. Zusätzlich oder alternativ kann die Ankoppelbereitschaft 203 auch durch einen Datenaustausch des Fahrzeuges 1 und des Verfolgerfahrzeuges 2 über das Netzwerk 10 gemäß Figur 2 durch das Fahrzeug 1 erkannt werden. Insbesondere kann das Fahrzeug 1 eine Mitteilung des Verfolgerfahrzeuges 2 über dessen Ankoppelbereitschaft 203 erhalten.

Wurde die Ankoppelbereitschaft 203 des Verfolgerfahrzeuges 2 als negativ erkannt, ist ferner im Rahmen des Verfahrens 100 ein Durchführen 104 einer Reaktionsmaßnahme 204 durch das Fahrzeug 1 in Abhängigkeit von der negativen Ankoppelbereitschaft 203, d.h. insbesondere wenn die Ankoppelbereitschaft 203 negativ ist, und dem zweiten Fahrparameter 202 vorgesehen. Mit der negativen Ankoppelbereitschaft 203 wird somit insbesondere erkannt, dass das Fahrzeug 1 ein potentielles Hindernis für das Verfolgerfahrzeug 2 bilden kann. Durch die Reaktionsmaßnahme 204 kann daher die Verkehrssituation 20 verbessert werden.

Mögliche Reaktionsmaßnahmen 204 sind in Figur 5 schematisch dargestellt. Insbesondere kann durch das Fahrzeug 1 eine der möglichen Reaktionsmaßnahmen 204 in Abhängigkeit von der Verkehrssituation 20 auswählen. Die Verkehrssituation 20 kann z. B. anhand einer Erkennung eines Verkehrsschildes 21 bei der Reaktionsmaßnahme 204 berücksichtigt werden. So kann die Reaktionsmaßnahme 204 vorteilhafterweise eine Deaktivierung 204.1 des Energiesparmodus I umfassen, in welchem das Fahrzeug 1 betrieben wird. Dadurch kann der Energiesparmodus I zugunsten des Verfolgerfahrzeuges 2 zumindest temporär verlassen werden und z. B. eine Geschwindigkeit des Fahrzeuges 1 erhöht werden.

Weiterhin kann die Reaktionsmaßnahme 204 ein Einleiten 204.2 einer, insbesondere virtuellen, Verhandlung über eine Kopplung 205 des Verfolgerfahrzeuges 2 mit dem Fahrzeug 1 umfassen. Dabei kann ein Datenaustausch zwischen dem Fahrzeug 1 und dem Verfolgerfahrzeug 2 stattfinden, bei welchem festgelegt wird, wie das Fahrzeug 1 den ersten Fahrparameter 201 anpassen soll, damit das Verfolgerfahrzeug 2 eine positive Ankoppelbereitschaft 203 erklärt oder annimmt. Wenn das Fahrzeug 1 gemäß Figur 2 ausgeführt ist, kann die Verhandlung z. B. über das Netzwerk 10 durchgeführt werden.

Erfindungsgemäß ist die Reaktionsmaßnahme 204 eine Deaktivierung 204.3 des zumindest teilweise automatisierten Fahrmodus A des Fahrzeuges 1 umfassen. Dadurch kann dem Fahrer eine Kontrolle über das Fahrzeug 1 übergeben werden, so dass der Fahrer die Verkehrssituation 20 beurteilen und reagieren kann.

### Bezugszeichenliste

- 1: Fahrzeug
- 2: Verfolgerfahrzeug
- 3: Rückwärtssensorik
- 4: Kontrolleinheit

- 10: Netzwerk

- 20: Verkehrssituation
- 21: Verkehrsschild

- 100: Verfahren
- 101: Erfassen von 2
- 102: Erfassen von 202
- 103: Erkennen von 203
- 104: Durchführen von 204

- 200: Fahrtrichtung
- 201: erster Fahrparameter
- 202: zweiter Fahrparameter
- 203: Ankoppelbereitschaft
- 204: Reaktionsmaßnahme
- 204.1: Deaktivierung von I
- 204.2: Einleiten einer Verhandlung
- 204.3: Deaktivierung von A
- 205: Kopplung
- 205.1: unabhängiger Fahrbetrieb
- 206: Mustererkennung

- I: Energiesparmodus
- A: zumindest teilweise automatisierter Fahrmodus

- t: Zeit

## Patentansprüche

1. Verfahren (100) zum Vorgeben einer Fahrstrategie für ein mit einem ersten Fahrparameter (201) fahrendes Fahrzeug (1) umfassend die folgenden Schritte:
- Erfassen (101) eines Verfolgerfahrzeuges (2), welches sich in Fahrtrichtung (200) des Fahrzeuges (1) hinter dem Fahrzeug (1) befindet, durch das Fahrzeug (1),
- Erfassen (102) eines zweiten Fahrparameters (202), der dem Verfolgerfahrzeug (2) zugeordnet ist, durch das Fahrzeug (1),
- Erkennen (103) einer Ankoppelbereitschaft (203) des Verfolgerfahrzeuges (2) an das Fahrzeug (1), durch das Fahrzeug (1),
- Durchführen (104) einer Reaktionsmaßnahme (204) durch das Fahrzeug (1) in Abhängigkeit von der negativen Ankoppelbereitschaft (203) und dem zweiten Fahrparameter (202),
wobei beim Erkennen (103) der Ankoppelbereitschaft (203) überprüft wird, ob die Ankoppelbereitschaft negativ oder positiv ist, wobei bei einer positiven Ankoppelbereitschaft ein Ankoppeln des Verfolgerfahrzeuges (2) an das Fahrzeug (1) unter Angleichung des Verfolgerfahrzeuges (2) an den ersten Fahrparameter (201) des Fahrzeugs (1) erfolgt,
wobei das Fahrzeug (1) in einem zumindest teilweise automatisierten Fahrmodus (A) betrieben wird und die Reaktionsmaßnahme (204) eine Deaktivierung (204.3) des zumindest teilweise automatisierten Fahrmodus (A) umfasst, wobei bei der Deaktivierung (204.3) des zumindest teilweise automatisierten Fahrmodus (A) ein Umschalten in einen manuellen Fahrmodus vorgesehen ist.

2. Verfahren (100) nach Anspruch 1,
**dadurch gekennzeichnet,**
**dass** der erste Fahrparameter (201) durch einen Energiesparmodus (I) vorgegeben wird, in welchem das Fahrzeug (1) betrieben wird, wobei die Reaktionsmaßnahme (204) ferner eine Deaktivierung (204.1) des Energiesparmodus (I) umfasst.

3. Verfahren (100) nach Anspruch 1 oder 2,
**dadurch gekennzeichnet,**
**dass** die Reaktionsmaßnahme (204) ferner das Einleiten (204.2) einer Verhandlung über eine Kopplung (205) des Verfolgerfahrzeuges (2) mit dem Fahrzeug (1), insbesondere unter Anpassung des ersten Fahrparameters (201) des Fahrzeuges (1), umfasst.

4. Verfahren (100) nach einem der vorhergehenden Ansprüche,
**dadurch gekennzeichnet,**
**dass** beim Erfassen (102) des zweiten Fahrparameters (202) des Verfolgerfahrzeuges (2) und/oder beim Erkennen (103) der Ankoppelbereitschaft (203) eine Mustererkennung (206) des zweiten Fahrparameters (202) durchgeführt wird.

5. Verfahren (100) nach einem der vorhergehenden Ansprüche,
**dadurch gekennzeichnet,**
**dass** die Mustererkennung (206) des zweiten Fahrparameters (202) ein Erkennen einer Veränderung des zweiten Fahrparameters (202), insbesondere eines Alternierens des zweiten Fahrparameters (202), umfasst.

6. Verfahren (100) nach einem der vorhergehenden Ansprüche,
**dadurch gekennzeichnet,**
**dass** das Erfassen (102) des zweiten Fahrparameters (202) passiv durch eine Rückwärtssensorik (3) des Fahrzeugs (1) durchgeführt wird.

7. Verfahren (100) nach einem der vorhergehenden Ansprüche,
**dadurch gekennzeichnet,**
**dass** beim Erfassen (102) des zweiten Fahrparameters (202) des Verfolgerfahrzeuges (2) und/oder beim Erkennen (103) der Ankoppelbereitschaft (203) durch das Fahrzeug (1) auf ein Netzwerk (10) zugegriffen wird.

8. Verfahren (100) nach einem der vorhergehenden Ansprüche,
**dadurch gekennzeichnet,**
**dass** die Reaktionsmaßnahme (204) in Abhängigkeit von einer Verkehrssituation (20), in welcher sich das Fahrzeug (1) befindet, durchgeführt wird.

9. Fahrzeug (1), zumindest teilweise autonom betreibbares Fahrzeug aufweisend eine Kontrolleinheit (4), die zum Durchführen eines Verfahrens (100) nach einem der vorhergehenden Ansprüche ausgebildet ist.

## Claims

1. Method (100) for specifying a driving strategy for a vehicle (1) driving with a first driving parameter (201), comprising the following steps:
- detecting (101), by the vehicle (1), a following vehicle (2) which is located behind the vehicle (1) in the driving direction (200) of the vehicle (1),
- detecting (102), by the vehicle (1), a second driving parameter (202) which is assigned to the following vehicle (2),
- determining (103), by the vehicle (1), a coupling readiness (203) of the following vehicle (2) to the vehicle (1),
- carrying out (104), by the vehicle (1), a reaction measure (204) depending on the negative coupling readiness (203) and the second driving parameter (202),
wherein, when determining (103) the coupling readiness (203), it is checked whether the coupling readiness is negative or positive, wherein, in the event of a positive coupling readiness, the following vehicle (2) is coupled to the vehicle (1) with the following vehicle (2) being adjusted to the first driving parameter (201) of the vehicle (1),
wherein the vehicle (1) is operated in an at least partially automated driving mode (A) and the reaction measure (204) comprises deactivating (204.3) the at least partially automated driving mode (A), wherein a switchover to a manual driving mode is provided when deactivating (204.3) the at least partially automated driving mode (A).

2. Method (100) according to claim 1,
**characterized in that**
the first driving parameter (201) is specified by an energy-saving mode (I) in which the vehicle (1) is operated, the reaction measure (204) further comprising deactivating (204.1) the energy-saving mode (I).

3. Method (100) according to either claim 1 or claim 2,
**characterized in that**
the reaction measure (204) further comprises initiating (204.2) a negotiation about a coupling (205) of the following vehicle (2) to the vehicle (1), in particular by adapting the first driving parameter (201) of the vehicle (1).

4. Method (100) according to any of the preceding claims,
**characterized in that**
when detecting (102) the second driving parameter (202) of the following vehicle (2) and/or when determining (103) the coupling readiness (203), a pattern recognition (206) of the second driving parameter (202) is carried out.

5. Method (100) according to any of the preceding claims,
**characterized in that**
the pattern recognition (206) of the second driving parameter (202) comprises determining a change in the second driving parameter (202), in particular an alternation of the second driving parameter (202).

6. Method (100) according to any of the preceding claims,
**characterized in that**
detecting (102) the second driving parameter (202) is carried out passively by a reverse sensor system (3) of the vehicle (1).

7. Method (100) according to any of the preceding claims,
**characterized in that**
when detecting (102) the second driving parameter (202) of the following vehicle (2) and/or when determining (103) the coupling readiness (203), by the vehicle (1), a network (10) is accessed.

8. Method (100) according to any of the preceding claims,
**characterized in that**
the reaction measure (204) is carried out depending on a traffic situation (20) in which the vehicle (1) is located.

9. Vehicle (1), at least partially autonomously operable vehicle, having a control unit (4) which is designed to carry out a method (100) according to any of the preceding claims.

## Revendications

1. Procédé (100) permettant de prédéfinir une stratégie de conduite pour un véhicule (1) se déplaçant avec un premier paramètre de conduite (201), comprenant les étapes suivantes :
- détection (101), par le véhicule (1), d'un véhicule suiveur (2) qui se trouve derrière le véhicule (1) dans le sens de déplacement (200) du véhicule (1),
- détection (102), par le véhicule (1), d'un second paramètre de conduite (202) associé au véhicule suiveur (2),
- détection (103), par le véhicule (1), d'une disponibilité de couplage (203) du véhicule suiveur (2) au véhicule (1),
- exécution (104), par le véhicule (1), d'une mesure de réaction (204) en fonction de la disponibilité de couplage (203) négative et du second paramètre de conduite (202),
dans lequel, lors de la détection (103) de la disponibilité de couplage (203), on vérifie si la disponibilité de couplage est négative ou positive, dans lequel, en cas de disponibilité de couplage positive, un couplage du véhicule suiveur (2) au véhicule (1) est effectué en ajustant le véhicule suiveur (2) au premier paramètre de conduite (201) du véhicule (1),
dans lequel le véhicule (1) fonctionne dans un mode de conduite au moins partiellement automatisée (A) et la mesure de réaction (204) comprend une désactivation (204.3) du mode de conduite au moins partiellement automatisée (A), dans lequel, lors de la désactivation (204.3) du mode de conduite au moins partiellement automatisée (A), une commutation vers un mode de conduite manuelle est prévue.

2. Procédé (100) selon la revendication 1,
**caractérisé en ce**
**que** le premier paramètre de conduite (201) est prédéfini par un mode d'économie d'énergie (I) dans lequel fonctionne le véhicule (1), dans lequel la mesure de réaction (204) comprend en outre une désactivation (204.1) du mode d'économie d'énergie (I).

3. Procédé (100) selon la revendication 1 ou 2,
**caractérisé en ce**
**que** la mesure de réaction (204) comprend en outre le lancement (204.2) d'une négociation sur un couplage (205) du véhicule suiveur (2) avec le véhicule (1), en particulier en adaptant le premier paramètre de conduite (201) du véhicule (1).

4. Procédé (100) selon l'une des revendications précédentes,
**caractérisé en ce**
**que**, lors de la détection (102) du second paramètre de conduite (202) du véhicule suiveur (2) et/ou lors de la détection (103) de la disponibilité de couplage (203), une reconnaissance de modèle (206) du second paramètre de conduite (202) est exécutée.

5. Procédé (100) selon l'une des revendications précédentes,
**caractérisé en ce**
**que** la reconnaissance de modèle (206) du second paramètre de conduite (202) comprend une reconnaissance d'une modification du second paramètre de conduite (202), en particulier d'une alternance du second paramètre de conduite (202).

6. Procédé (100) selon l'une des revendications précédentes,
**caractérisé en ce**
**que** la détection (102) du second paramètre de conduite (202) est exécutée de manière passive par un système de capteurs de marche arrière (3) du véhicule (1).

7. Procédé (100) selon l'une des revendications précédentes,
**caractérisé en ce**
**que**, lors de la détection (102) du second paramètre de conduite (202) du véhicule suiveur (2) et/ou lors de la détection (103) de la disponibilité de couplage (203), on accède à un réseau (10) par le véhicule (1).

8. Procédé (100) selon l'une des revendications précédentes,
**caractérisé en ce**
**que** la mesure de réaction (204) est exécutée en fonction d'une situation de circulation (20) dans laquelle se trouve le véhicule (1).

9. Véhicule (1), véhicule pouvant fonctionner de manière au moins partiellement autonome, présentant une unité de commande (4) qui est configurée pour exécuter un procédé (100) selon l'une des revendications précédentes.
